# EUROPEAN PATENT APPLICATION

(11) **EP 1 195 703 A1**
(43) Date of publication of application: **10.04.2002**
(21) Application number: 01123852.4
(22) Date of filing: 05.10.2001
(51) Int. Cl.: G06F 17/60

(54) **Information providing system and method**

(30) Priority: 05.10.2000 JP 2000305980
(71) Applicant: JB to B Co., Ltd., Tokyo 104-8446 (JP)
(72) Inventor: Manabe, Toshiyuki, Fujisawa-shi, Kanagawa-ken (JP); Kaneko, Kiyoshi, Toshima-ku, Tokyo (JP)
(74) Representative: Goddar, Heinz J., Dr.

(57) **Abstract**

An information providing system and an information providing method for providing information to sell a stocked commodity held by a seller to at least any one of a plurality of predicted potential purchasers who will possibly purchase the stocked commodity. The information providing system 1 comprises a stock information storage unit 3 including a commodity identification information database 13 and a deadline management information database 15; an extraction unit 5 for extracting the commodity identification information on the stocked commodity which has expired the deadline of the deadline management information; a purchase information storage unit 7 stored with each purchase information on a plurality of predicted potential purchasers; an analysis unit 9 for analyzing a matching of the extracted commodity identification information with the purchase information; and an output unit 11 for outputting combinatorial information combining the stocked commodity corresponding to the commodity identification information and the predicted potential purchaser corresponding to the purchase information that were analyzed by the analysis unit.

## Description

### Background of the Invention

### Field of the Invention

This invention relates to an information providing system and an information providing method and, more particularly, to an information providing system and an information providing method for providing information to sell a stocked commodity held by a seller to at least any one of a plurality of predicted potential purchasers who will possibly purchase the stocked commodity.

### Description of the Prior Art

Stock management is an ordinary business activity for a seller of commodities to gain profits by selling such commodities laid in stock. This is because as the commodities are being stocked, stock expenses may increase so that such expenses will be subtracted from the gross sales to lower the profits.

The causes for reducing the profits are exemplified by not only an increase in such stock expenses but also a reduction in sales, as resulting from the discount.

In short, what is always questioned is an issue as to how well-salable commodities are laid in stock for a shorter period and sold out without discounts.

In the case where the well-salable commodities are different among shops, the seller performs such stock management in that the commodities left in one shop's stock are distributed to another shop where the commodities sell well.

Of the commodities, on the other hand, some are defined on their stock deadline by contracts or the like. These commodities are not permitted to hold after their stock deadline has elapsed but must be left for other places or abandoned. After the stock deadline, therefore, the sales themselves cannot be attained so that the situations become more serious, as compared with the case in which the stock expenses rise or in which the bargain sales are done.

Here, the stock deadline, before which the commodities must be abandoned, is exemplified by an expiration date for fresh food or cooked food. The seller for selling the fresh food or cooked food, for which the expiration date is defined, manages the deadline and sells the food at a special price, as the deadline is approaching, to avoid the lapse of the expiration date so as to retain the sales even a little.

In the case of the conventional stock management or deadline management, however, the stock deadline is coped with by distribution of commodities among the shops, or by special sales at the individual shops, and there was no concept that the stock management information is opened to the outside so that the commodities having approaching deadlines may be sold to other sellers or consumers. This is because the seller has feared that various information would be leaked to other sellers or that negative information that might cause to create a poor bargain for the seller is opened to other sellers or consumers by laying internal information open.

In microscopic view of the situations where the individual sellers are laid, however, the activation of the market seems to be obstructed by the above-specified problems. In macroscopic view of the extremely large market as a whole, however, the market prices of the individual commodities are determined by the market but not by the individual sellers. If the business is of commodity sales in the worldwide market, the market price is, therefore, settled to a balanced price from the relation between the demand and the supply.

This is desirable not only for the sellers for the commodities but also for the other sellers or consumers for purchasing the commodities so that it can contribute to establishment of a sound market economy.

Especially, since the resources of the earth are finite, commodities such as fresh foods to be abandoned after lapse of the stock deadline should be supplied to the consumers while avoiding the situation of abandonment.

### Summary of the Invention

Therefore, an object of the invention is to provide an information providing system and an information providing method for providing information to sell a stocked commodity held by a seller to at least any one of a plurality of predicted potential purchasers who will possibly purchase the stocked commodity (such as other sellers or consumers), so that the sales of the stocked commodity may be promoted to make the economics active and that a loss of resources, as might otherwise be caused by abandoning the stocked commodity, can be prevented as much as possible.

According to one aspect of the present invention, an information providing system capable of providing information to sell a stocked commodity held by a seller to at least any one of a plurality of predicted potential purchasers who will possibly purchase the stocked commodity, comprises: stock information storage means stored with commodity identification information for identifying the stocked commodity and deadline management information for managing a deadline of the stocked commodity; extraction means for extracting the commodity identification information on a stocked commodity for which the current time has reached or passed over a predetermined deadline of the deadline management information; purchase information storage means stored with purchase information on each predicted potential purchasers; analysis means for analyzing a matching of the extracted commodity identification information with the purchase information stored in the purchase information storage means; and output means for outputting combinatorial information combining the predicted potential purchaser corresponding to the purchase information and the stocked commodity corresponding to the commodity identification information that were analyzed and estimated to match by the analysis means.

According to the present invention, first, the commodity identification information for identifying the stocked commodity, the deadline management information for managing the deadline of the stocked commodity, and the purchase information on each predicted potential purchaser are stored. Then, the commodity identification information on the stocked commodity having reached or passed over the predetermined deadline of the deadline management information is extracted. The matching of the extracted commodity identification information with the stored purchase information is then analyzed, and when estimated to match, the combinatorial information combining the predicted potential purchaser corresponding to the purchase information and the stocked commodity corresponding to the commodity identification information is output so that the seller can recognize the predicted potential purchaser, to whom the seller will possibly sell the stocked commodity, whereas the predicted potential purchaser can recognize the stocked commodity which the person may purchase.

In the present invention, the predetermined deadline of the deadline management information may be a target sales volume completion deadline set for the stocked commodity.

When the stock has not been sold and consumed to a target volume by the target sales volume completion deadline, the seller can recognize the predicted potential purchaser, to whom the seller will possibly sell the stock which has not been able to clear.

In the present invention, the stocked commodity may be provided with a stock deadline, and wherein the predetermined deadline of the deadline management information may be a designated deadline prior to the stock deadline.

On the stocked commodity that has failed to be sold by the designated deadline before the stock deadline and left as the stock, the seller can recognize the predicted potential purchaser, to whom the seller will possibly sell by the stock deadline.

In the present invention, the commodity identification information may include a commodity name, a stock location and a stock volume.

In this case, where and how many commodities are stocked by the seller may be identified from the commodity name, the stock location and the stock volume.

In the present invention, the purchase information storage means may be stored with distribution destination information on the case in which each predicted potential purchaser has purchased, and the analysis means may analyze the matching including a transportation time from the stock location of the stocked commodity to the distribution destination.

Since the matching analysis is made while including the transportation time from the stock location of the stocked commodity to the distribution destination of the predicted potential purchaser, especially in the case where the stocked commodity is provided the stock deadline as described above, it is possible to perform the matching analysis while taking into consideration an important element that is the time.

In the present invention, the purchase information storage means may be stored with distribution destination information on the case in which each predicted potential purchaser has purchased, and the analysis means may analyze the matching including a transportation cost from the stock location of the stocked commodity to the distribution destination.

Since the matching analysis can be performed while including the transportation cost from the stock location of the stocked commodity to the distribution destination of the predicted potential purchaser, it is possible to perform the matching analysis while taking into consideration the distribution cost in addition to the stock cost.

In the present invention, the seller may be in plurality, and the stock information storage means may be stored with the commodity identification information for identifying the stocked commodity, by identifyingwhich seller holds the stocked commodity.

When the seller is in plurality, the kinds and numbers of the stocked commodities are accordingly various. In this case, it is recognized which seller stocks each stocked commodity, so that the matching analysis can be performed as in the case of a single seller.

In the present invention, the purchase information may contain purchase information based on the past purchase history.

In this case, it is possible to perform such matching analysis of each predicted potential purchaser with the stocked commodity based on the past purchasing tendency of the past purchase history.

In the present invention, the purchase information may contain predicted purchase information.

In this case, it is possible to perform the matching analysis of each predicted potential purchaser and the stocked commodity while taking into consideration the trend of the times and the fashion.

In the present invention, the output means may be a terminal connected to an information communication network.

In this case, since the combinatorial information combining the stocked commodity and the predicted potential purchaser is output by the terminal connected to the information communication network, such information can be provided without limitations on the place, so far as the terminal is connected to the information communication network.

In the present invention, the terminal may be a terminal of a seller and outputs at least the information on the predicted potential purchaser corresponding to the purchase information in the combinatorial information.

In this case, since the information on the potential purchaser, which is the most necessary information in sales transactions for the seller, is output via the terminal of the seller, the seller can know whatabouts of the business contacts in the sales transactions.

In the present invention, the terminal may be the terminal of the predicted potential purchaser and outputs at least the information on the stocked commodity as corresponding to the commodity identification information in the combinatorial information.

In this case, since the information on the stocked commodity, which is the most necessary information in transactions for the predicted potential purchaser, is output via the terminal of the predicted potential purchaser, the predicted potential purchaser can know whatabouts of the subject to be purchased in the transactions.

In the present invention, the stock information storage means may be stored with desired sales price information on the stocked commodity, as set by the seller, and the terminal of the predicted potential purchaser outputs the desired sales price information together with the information on the stocked commodity corresponding to the commodity identification information.

In this case, since, via the terminal of the predicted potential purchaser, the desired sales price information is output in addition to the information on the stocked commodity corresponding to the commodity identification information, the predicted potential purchaser can know how much the price is for the subject to be purchased in the transaction.

In the present invention, the stock information storage means may be stored with desired sales price information on the stocked commodity, as set by the seller, and the terminal of the predicted potential purchaser outputs the information on the stocked commodity corresponding to the commodity identification information. Comparison means for comparing in response to an input of desired purchase price information on the stocked commodity corresponding to the output commodity identification information via the terminal of the predicted potential purchaser, the price of the desired purchase price information and the price of the desired sales price information. Then, the terminal of the predicted potential purchaser outputs result information of negotiability or nonnegotiability in response to the comparison result of the comparison means.

In this case, when the the predicted potential purchaser having received the information on the stocked commodity corresponding to the commodity identification information desires to purchase the commodity, and inputs the desired purchase price information via the terminal of the predicted potential purchaser, the desired purchase price information and the desired sales price information are compared in their prices, and the result of negotiability or nonnegotiability is output according to the comparison result via the terminal of the predicted potential purchaser.

In the present invention, the comparison means may decide that the transaction is negotiable, if the desired purchase price is equal to or higher than the desired sales price, and decide that it is nonnegotiable, if the desired purchase price is lower than the desired sales price.

In this case, if the desired purchase price is equal to or higher than the desired sales price, the result information of negotiability is output via the terminal of the predicted potential purchaser, whereas if the desired purchase price is lower than the desired sales price, the result information of nonnegotiability is output via the terminal of the predicted potential purchaser. In the case where the predicted potential purchaser receives the result of negotiability, the predicted potential purchaser can purchase the commodity at the desired purchase price.

In the present invention, the terminal may include a terminal of a seller and outputs at least information on the predicted potential purchaser corresponding to the purchase information in the combinatorial information, and the terminal of the seller outputs result information of the negotiability if the comparison means decides that the transaction is negotiable.

In this case, when the combinatorial information to be matched is analyzed, the seller can know not only the information on the predicted potential purchaser but also the result of negotiability in which the desired purchase price is equal to or higher than the desired sales price.

In the present invention, the stock information storage means may be stored with, in addition to the desired sales price information on the stocked commodity set by the seller, information on a timing for changing the price and the desired sales price information after such change, and the recommended sales price is replaced by the changed desired sales price in response to the arrival at the timing for changing the price.

In this case, the desired sales price is not left fixed but changed at the changing timing, and the new price after such change may be applied.

According to another aspect of the present invention, an information providing method capable of providing information to sell a stocked commodity held by a seller to at least any one of a plurality of predicted potential purchasers who will possibly purchase the stocked commodity, comprises: storing commodity identification information for identifying the stocked commodity and deadline management information for managing a deadline of the stocked commodity; storing purchase information on each predicted potential purchaser; extracting the commodity identification information on a stocked commodity for which the current time has reached or passed over a predetermined deadline of the deadline management information; analyzing a matching of the extracted commodity identification information with the stored purchase information; and outputting combinatorial information combining the predicted potential purchaser corresponding to the purchase information and the stocked commodity corresponding to the commodity identification information that were analyzed and estimated to match.

### Brief Description of the Drawings

The invention will be explained in more detail in conjunction with appended drawings, wherein:
Fig. 1 is a schematic diagram showing an information providing system according to a preferred embodiment of the present invention;
Fig. 2 is an explanatory diagram illustrating an example of a commodity identification information database shown in Fig. 1;
Fig. 3 is an explanatory diagram illustrating a deadline management information database shown in Fig. 1;
Fig. 4 is an explanatory diagram illustrating a purchase information storage unit shown in Fig. 1;
Fig. 5 is a flow chart illustrating operations of the information providing system shown in Fig. 1;
Fig. 6 is a schematic diagram showing an information providing system according to another embodiment of the present invention;
Fig. 7 is an explanatory diagram illustrating another example of the commodity identification information databases shown in Figs. 1 and 6.
Fig. 8 is a schematic diagram showing the substantial parts of the information providing system which is provided with a new configuration including the commodity identification information database shown in Fig. 7; and
Fig. 9 is an explanatory diagram illustrating a further example of the commodity identification information databases shown in Figs. 1 and 6.

### Detailed Description of the Preferred Embodiments

Referring to drawings, preferred embodiments of the present invention will be described below.

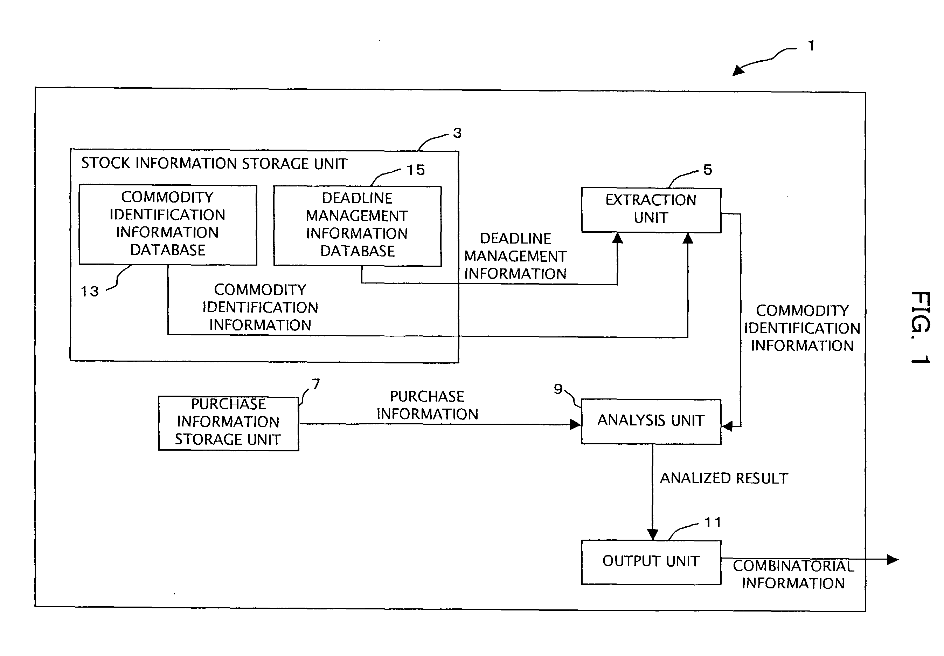

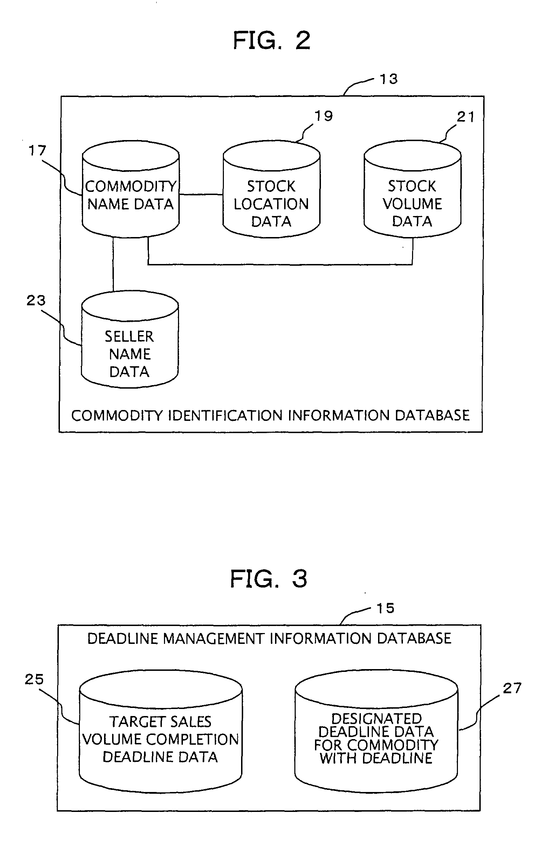

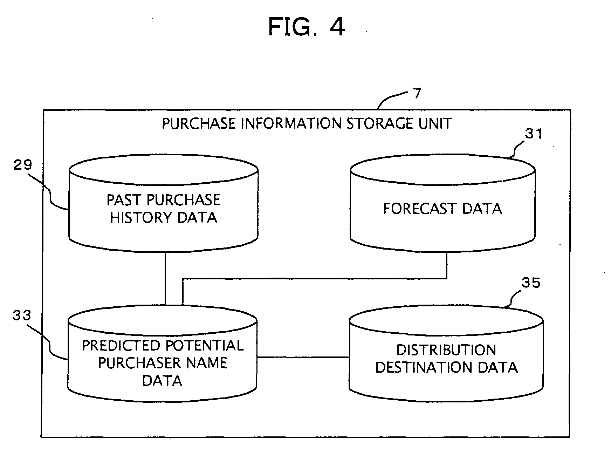

Fig. 1 is a schematic diagram showing an information providing system according to a preferred embodiment of the present invention; Fig. 2 is an explanatory diagram illustrating an example of a commodity identification information database shown in Fig. 1; Fig. 3 is an explanatory diagram illustrating a deadline management information database shown in Fig. 1; and Fig. 4 is an explanatory diagram illustrating a purchase information storage unit shown in Fig. 1.

An information providing system 1 capable of providing information to sell a stocked commodity held by a seller to at least any one of a plurality of predicted potential purchaser who will possibly purchase the commodity and is provided with a stock information storage unit 3, an extraction unit 5, a purchase information storage unit 7, an analysis unit 9 and an output unit 11.

Here, the seller refers to a retailer or the like such as an XY shop or an XY supermarket who sell a commodity, and the predicted potential purchaser refers to other sellers or consumers who are predicted to possibly purchase the stocked commodity by the seller.

The stock information storage unit 3 is provided with a commodity identification information database 13 as a database mainly for stock management, and a deadline management information database 15 as a database mainly for deadline management.

In detail, the commodity identification information database 13 is stored with commodity identification information for identifying the stocked commodity, more specifically, commodity name data 17, stock location data 19, stock volume data 21 and seller name data 23, as shown in Fig. 2.

When there is a plurality of sellers, the seller name data are required for identifying the seller holding the stocked commodity. Meanwhile, when there is only one seller, and the holder of the stocked commodity is definite, the seller name data may not be necessarily stored.

Also, the stored commodity identification information may include, in addition to the aforementioned information, production location, freshness data on fresh foods, manufacture data on manufactures, producer name data, and the like.

The deadline management information database 15 is stored with deadline management information for managing the deadline of the stocked commodity, more specifically, target sales volume completion deadline data 25 and designated deadline data 27 for a commodity with a stock deadline.

Here, the target sales volume completion deadline is a predetermined time limit which is set as a target for sales promotion so that the target volume of the commodity will be sold by the time limit and the stock volume will be reduced to a predetermined reference volume. This is to avoid an increase in the stock expenses due to an excessive stock.

The designated deadline is a predetermined time limit which is set prior to the stock deadline with respect to such a commodity as fresh foods having a defined expiration date, which cannot be sold after lapse of the stock deadline.

The extraction unit 5 extracts the commodity identification information on the stocked commodity, for which the current time is identical to or over a predetermined deadline in the deadline management information. The predetermined deadline is either the target sales volume completion deadline or the designated deadline explained above.

The purchase information storage unit 7 is stored with the purchase information on each predicted potential purchaser, more specifically, past purchase history data 29, forecast data 31, predicted potential purchaser name data 33 and distribution destination data 35, as shown in Fig. 4.

The past purchase history data 29 are data as materials for analyzing which stocked commodity will be purchased by surmising the purchase tendency of each predicted potential purchaser based on the past purchase history. These data contain data on the regional tendency on what commodity have a large sale in the region. When the predicted potential purchaser is a regional organization, the data on the regional tendency are the materials for analysis.

The forecast data 31 are data which are forecast based on the trend such as the change and fashion of the times. I does not matter whether or not the forecast depends on the past purchase history.

The distribution destination data 35, having the predicted potential purchaser name data 33 indexed thereon, are data required for calculating transportation time and transportation cost for distribution of the commodity when a sales contract is concluded between the seller and the predicted potential purchaser.

The analysis unit 9 analyzes a matching of the commodity identification information extracted by the extraction unit 5 with the purchase information stored in the purchase information storage unit 7.

This matching analysis is carried out from the viewpoint of who stocked commodity of which seller (the commodity identification information) will be purchased by which by which predicted potential purchaser (the purchase information). In short, the analysis unit 9 performs an analysis for searching any one from among the predicted potential purchasers who will probably purchase the actual stocked commodity, on the basis of the purchase tendency from the past purchase history data 29 or the purchase forecast from the forecast data 31.

As described above, the commodity identification information database 13 is also stored with the stock location data 19 of the stocked commodity and the purchase information storage unit 7 is stored with the distribution destination data 35. In the matching analysis performed by the analysis unit 9, the transportation time and the transportation cost in the case where the sales contract is concluded may be taken into consideration.

If the predicted potential purchaser bears the transportation cost, the wholesale cost rises thereby causing additional expenses. On the other hand, if the seller bears the transportation cost, the selling cost rises thereby causing additional expenses. For making a higher profit, the transportation cost should preferably be considered in both cases.

The transportation time should preferably be considered especially in the case where the commodity has the stock deadline such as the expiration date. If a commodity, even purchased at a lower cost, become past the expiration date during the transportation, it cannot be sold and must be abandoned. The abandonment of the commodity causes not only the economical demerit of loss of sales but also the loss of resources. For this reason, the transportation time should preferably be considered not to waste the limited resources.

As the predicted potential purchaser, only one who has the highest probability of purchase and the highest suitability may be selected. Since the selected person is just a predicted purchaser and not always an actual purchaser, a plurality of predicted purchasers may be selected by broadening the range of selection.

Moreover, the suitability in the matching analysis may be represented by a point system where a criteria is set for each element of analysis. If a point system is employed by seta criteria for each element to be considered such that (a) only the past purchase history data 29 be considered, (b) only the forecast data 31 be considered, (c) both the past purchase history data 29 and the forecast data 31 be considered, (d) inclusive of the transportation cost, (e) inclusive of the transportation time, (f) inclusive both the transportation cost and time, the suitability of the selected potential purchaser may be analyzed in accordance with the total points for the plurality of elements.

The output unit 11 outputs, as analyzed and estimated to match by the analysis unit 9, the combinatorial information, considering the predicted potential purchaser corresponding to the purchase information and the stocked commodity corresponding to the commodity identification information.

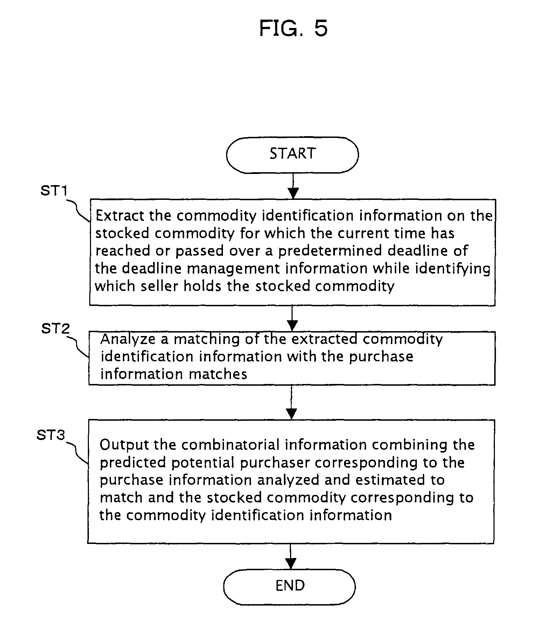

Fig. 5 is a flow chart illustrating operations of the information providing system shown in Fig. 1. The operations in the information providing system of Fig. 1 will be briefly described with reference to Fig. 5.

At step ST1, the extraction unit 5 extracts the commodity identification information on the stocked commodity for which the current time has reached or passed a predetermined deadline (e.g., the target sales volume completion deadline or the designated deadline) of the deadline management information, while identifying which seller holds the stocked commodity.

At step ST2, the analysis unit 9 analyzes the purchase information matching with the extracted commodity identification information.

At step ST3, the output unit 11 outputs combinatorial information combining the predicted potential purchaser corresponding to the purchase information and the stocked commodity corresponding to the commodity identification information.

By the output described above, the seller can recognize the predicted potential purchaser to whom the stocked commodity may be sold on one hand, and the predicted potential purchaser can recognize the stocked commodity which may be purchased on the other hand. By providing the information on the purchaser necessary for the sales and the information on the commodity necessary for the purchase, there is a high possibility that the sales contract will be concluded. As a result, the sales transactions are promoted, thereby accelerating economic activity.

Further, when the stocked commodity has the stock deadline, the probability that the stocked commodity reaches the end consumer by the stock deadline can be increased. Whereby, the loss of resources, as might otherwise be caused by abandoning the stocked commodity, is prevented as much as possible.

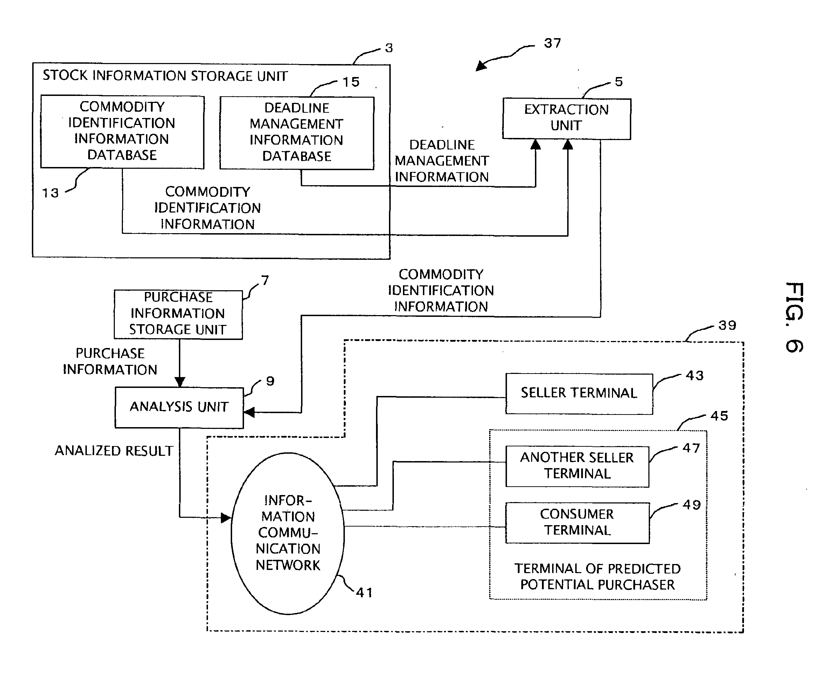

Fig. 6 is a schematic diagram showing an information providing system according to another embodiment of the present invention.

The description will be made of the parts different from those of Fig. 1. An information providing system 37 is provided with an output unit 39. The output unit 39 includes a seller terminal 43 and terminals 45 of the predicted potential purchasers, these terminals being connected to an information communication network 41. The terminals 45 of the predicted potential purchasers include another seller terminal 47 and a consumer terminal 49.

The seller terminal 43 outputs at least the information on the predicted potential purchaser corresponding to the purchase information among the combinatorial information. This is because information on the purchaser is important for the seller to sell the stocked commodity.

On the other hand, the terminals 45 of the predicted potential purchasers output at least the information on the stocked commodity corresponding to the commodity identification information among the combinatorial information. This is because information on the commodity is important for the predicted potential purchasers to purchase the stocked commodity.

Thus, the combinatorial information combining the stocked commodity and the predicted potential purchaser is output by the terminals connected to the information communication network 41. Accordingly, any terminal, as far as it is connected to the information communication network 41, can provide the information without limitation in its location, and the convenience of the system is improved as the information communication network 41 develops.

If a portable terminal having a high mobility such as a cellular phone is used as the terminal connecting to the information communication network 41, the convenience of the system is further improved, thereby increasing the number of user. As a result, it becomes possible to configure a system which promotes transactions of the stocked commodity.

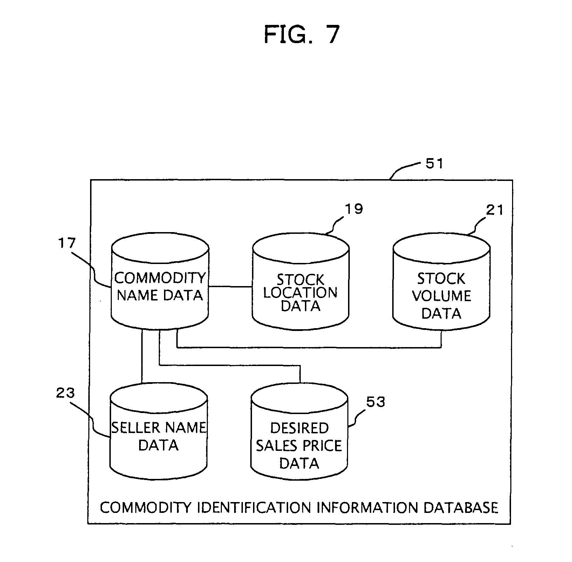

Fig. 7 is an explanatory diagram illustrating another example of the commodity identification information databases shown in Figs. 1 and 6.

A commodity identification information database 51 is stored with desired sales price data 53, in addition to the commodity name data 17, the stock location data 19, the stock volume data 21 and the seller name data 23.

The desired sales price data 53 are data on the desired price when the seller sells the stocked commodity. The desired sales price information is output to the terminals 45 of the predicted potential purchaser shown in Fig. 6. Whereby, the predicted potential purchaser can recognize how much the seller will sell the commodity, and can decide whether or not the commodity be purchased at that price.

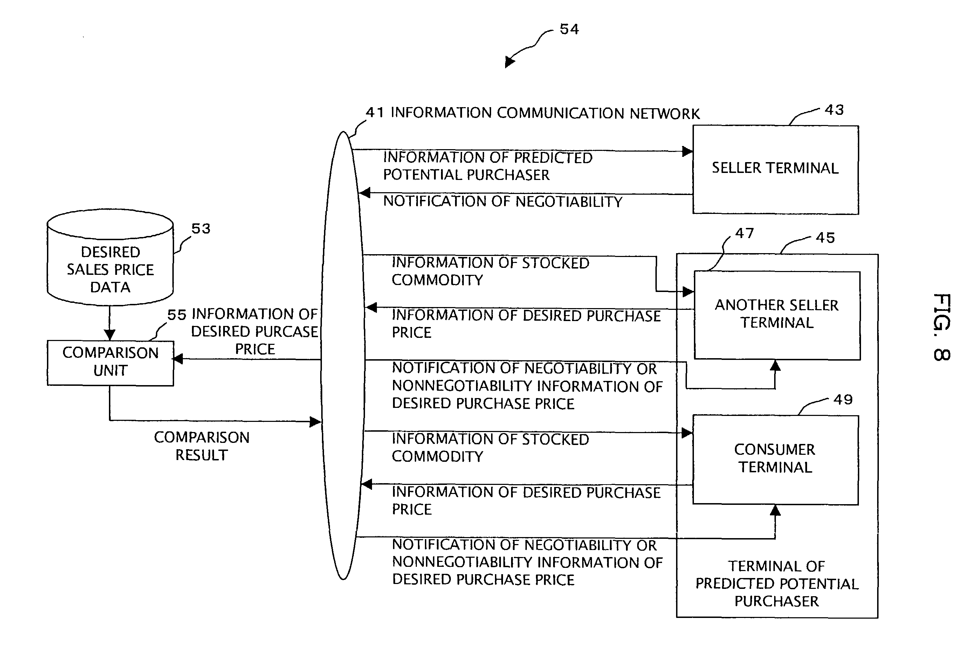

Fig. 8 is a schematic diagram show the substantial parts of the information providing system which is provided with a new configuration including the commodity identification information database shown in Fig. 7.

The description will be made of the parts different from those of Fig. 6. An information providing system 54 is provided with a comparison unit 55. The information on the predicted potential purchaser is output via the information communication network 41 to the seller terminal 43. To the other seller terminal 47 and the consumer terminal 49, i.e., as the terminals 45 of the predicted potential purchaser, is output the information on the stocked commodity but not the desired sales price information unlike the system shown in Fig. 7.

The predicted potential purchaser who desires to purchase the stocked commodity can input a desired purchase price via the terminal 45 of the predicted potential purchaser. The desired purchase price information thus input is input via the information communication network 41 to the comparison unit 55. This comparison unit 55 also receives the desired sales price data, and compares the desired sales price with the desired purchase price.

As a result of the comparison, if the desired purchase price is equal to or higher than the desired sales price, the transaction will be negotiable. Then, the notification of negotiability is sent to the seller terminal 43 and the terminal 45 of the predicted potential purchaser who has input the desired purchase price information. On the other hand, as a result of the comparison, the desired purchase price is lower than the desired sales price, the transaction will be negotiable. Then, the notification of nonnegotiability is sent to the terminal 45 of the predicted potential purchaser who has input the desired purchase price information.

Although the notification of nonnegotiability will not sent to the seller terminal 43, in the above embodiment, it may be done so, if the seller desires to know the information of nonnegotiability.

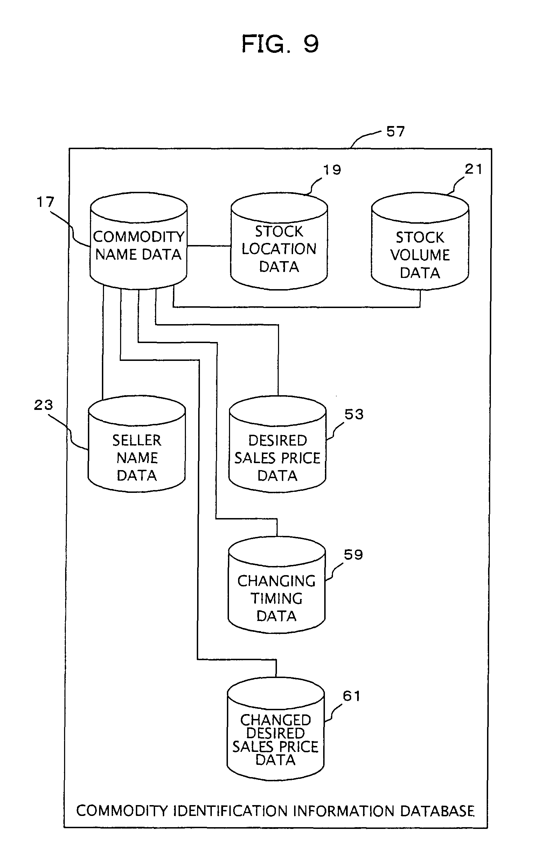

Fig. 9 is an explanatory diagram illustrating a further example of the commodity identification information databases shown in Figs. 1 and 6.

A commodity identification information database 57 is stored with changing timing data 59 for designating the timing to change the desired sales price and changed desired sales price data 61, in addition to the commodity name data 17, the stock location data 19, the stock volume data 21, the seller name data 23 and the desired sales price data 53.

Since a sales contract is not always concluded at the desired sales price which is initially set by the seller, the timing to change the desired sales price is predetermined so that the information on the changed desired sales price will substitute the initial desired sales price at the predetermined timing and will be applied to the above interactive transmission of information.

Especially, when a stock deadline is set for the stocked commodity, the sales should be made as early as possible even by lowering the desired sales price. In this regard, the changing timing may be set, taking into consideration the stock deadline.

As apparent from the above explanation, the invention offers many advantages as follows:

According to the present invention, the combinatorial information combining the predicted potential purchaser corresponding to the purchase information estimated to match and the stocked commodity corresponding to the commodity identification information is output so that the seller can recognize the predicted potential purchaser, to whom the seller will possibly sell the stocked commodity, whereas the predicted potential purchaser can recognize the stocked commodity which the person may purchase. Accordingly, by providing the information on the purchaser necessary for the sales and the information on the commodity necessary for the purchase, there is a high probability that the sales contract will be concluded. As a result, the transactions of the stocked commodity are promoted to make the economy active. Moreover, when the stocked commodity is set with the stock deadline, there is a high possibility that the stocked commodity will be distributed to the end consumer by the stock deadline thereby preventing the loss of resources, as might otherwise be caused by abandoning the stocked commodity, as much as possible.

According to the present invention, if the stocked commodity has not been sold up to a target volume by the target sales volume completion deadline, the seller can recognize the predicted potential purchaser, to whom the seller will possibly sell the stocked commodity which has not been able to clear. It is, therefore, highly probable to suppress such troublesome rise in the stock expenses.

According to the present invention, if the stocked commodity has failed to be sold by the designated deadline before the stock deadline, the seller can recognize the predicted potential purchaser, to whom the seller will possibly sell such stocked commodity by the stock deadline. It is, therefore, possible to avoid such a state in that the stock deadline has elapsed and must be abandoned whereby the sales themselves cannot be secured.

According to the present invention, whereabout and amount of the commodities stocked by the seller are identified from the commodity name, the stock location and the stock volume. On the basis of the identification information, it is possible to analyze the matching of the stocked commodity with the predicted potential purchaser.

According to the present invention, since the matching analysis is carried out while including the transportation time from the stock location of the stocked commodity to the distribution destination of the predicted potential purchaser. Especially when the stocked commodity has the stock deadline, it is possible to perform the matching analysis while taking into consideration an important element that is the time. Thus, the matching analysis can be performed while taking into consideration the time such that the stocked commodity with a stock deadline is delivered to an end consumer in time, thereby preventing the loss of resources.

According to the present invention, since the matching analysis can be performed while including the transportation cost from the stock location of the stocked commodity to the distribution destination of the predicted potential purchaser, it is possible to perform the matching analysis while taking into consideration the distribution cost in addition to the prevention of the increase in the stock expenses. For the seller, therefore, it is possible to perform the sales while suppressing the total cost.

According to the present invention, even when there are a plurality of sellers, it is identified which seller holds each stocked commodity, so that the matching analysis can be performed as in the case of a single seller. Thus, it is possible to present more suitable combinatorial information combining the stocked commodity and the predicted potential purchaser in various combinations.

According to the present invention, it is possible to perform the matching analysis of each predicted potential purchaser with the stocked commodity based on the past purchasing tendency of the past purchase history. It is, therefore, possible to present the combinatorial information combining the stocked commodity and the predicted potential purchaser based on the actual results in the past.

According to the present invention, it is possible to perform the matching analysis of each predicted potential purchaser with the stocked commodity while taking into consideration the trend of the times and the fashion. It is, therefore, possible to present the combinatorial information combining the stocked commodity and the predicted potential purchaser while foreseeing the future.

According to the present invention, since the combinatorial information combining the stocked commodity and the predicted potential purchaser is output via the terminal connected to the information communication network, the information can be provided without limitations in the location , so far as the terminal is connected to the information communication network. The convenience of this system is improved as the information communication network develops. Also, if a portable terminal having a high mobility such as a cellular phone is used as the terminal connecting to the information communication network, the convenience of the system is further improved, thereby increasing the number of user. As a result, it becomes possible to configure a system which promotes transactions of the stocked commodity.

According to the present invention, since the information on the potential purchaser, which is the most necessary information in sales transactions for the seller, is output via the terminal of the seller, the seller can recognize the whatabouts of the business contacts in the sales, transactions of the stocked commodity. Accordingly, a decision on whether or not the sales contract is concluded can be made from the viewpoint of who is the other party for the sales contract.

According to the present invention, since the information on the stocked commodity, which is the most necessary information in the transactions for the predicted potential purchaser, is output via the terminal of the predicted potential purchaser, the predicted potential purchaser can recognize the whatabouts of the subject to be purchased in the transactions. Accordingly, a decision on whether or not the sales contract is concluded can be made from the viewpoint of what is the subject for the sales contract.

According to the present invention, since the desired sales price information, in addition to the information on the stocked commodity corresponding to the commodity identification information, is output via the terminal of the predicted potential purchaser, it is possible to decide whether or not a matching of the contract is concluded, from the viewpoint of what the objective of the sales contact is and how much the price is. In this case, the information is provided in such a manner that the seller takes the initiative in comparison.

According to the present invention, when the predicted potential purchaser having received the information on the stocked commodity corresponding to the commodity identification information desires to purchase the commodity, and inputs the desired purchase price information via the terminal of the predicted potential purchaser, the desired purchase price information and the desired sales price information are compared in their prices, and the result of negotiability or nonnegotiability is output according to the comparison result via the terminal of the predicted potential purchaser. Accordingly, the predicted potential purchaser can recognize whether or not the desired stocked commodity can be purchased at the desired purchase price, from the result of negotiability or nonnegotiability.

According to the present invention, if the desired purchase price is equal to or higher than the desired sales price, the result information of negotiability is output via the terminal of the predicted potential purchaser, whereas if the desired purchase price is lower than the desired sales price, the result information of nonnegotiability is output via the terminal of the predicted potential purchaser. In the case where the predicted potential purchaser receives the result of negotiability, the predicted potential purchaser can purchase the commodity at the desired purchase price with satisfaction. In this case, the information is provided in such a manner that the purchaser takes the initiative in comparison.

According to the present invention, when the combinatorial information to be matched is analyzed, the seller can know not only the information on the predicted potential purchaser but also the result of negotiability in which the desired purchase price is equal to or higher than the desired sales price. Accordingly, both the predicted potential purchaser and the seller know the information on the result of negotiability to raise the probability that both of them will enter into an actual sales contract.

According to the present invention, the desired sales price is not left fixed but changed at the changing timing, thereby raising the probability that the sales transaction can be made.

The preferred embodiments of the present invention have been disclosed by way of example and it will be understood that other modifications may occur to those skilled in the art without departing from the scope and the spirit of the appended claims.

The features disclosed in the foregoing description, in the claims, and/or in the accompanying drawings may, both separately and in any combination thereof, be material for realising the invention in diverse forms thereof.

## Claims

1. An information providing system capable of providing information to sell a stocked commodity held by a seller to at least any one of a plurality of predicted potential purchasers who will possibly purchase the stocked commodity, comprising:
stock information storage means stored with commodity identification information for identifying said stocked commodity and deadline management information for managing a deadline of said stocked commodity;
extraction means for extracting said commodity identification information on a stocked commodity for which the current time has reached or passed over a predetermined deadline of said deadline management information;
purchase information storage means stored with purchase information on each of said predicted potential purchasers;
analysis means for analyzing a matching of said extracted commodity identification information with said purchase information stored in said purchase information storage means; and
output means for outputting combinatorial information combining the predicted potential purchaser corresponding to said purchase information and the stocked commodity corresponding to said commodity identification information that were analyzed and estimated to match by said analysis means.

2. The information providing system according to claim 1, wherein said predetermined deadline of the deadline management information is a target sales volume completion deadline set for said stocked commodity.

3. The information providing system according to claim 1, wherein said stocked commodity is provided with a stock deadline, and wherein the predetermined deadline of said deadline management information is a designated deadline prior to said stock deadline.

4. The information providing system according to claim 1, wherein said commodity identification information includes a commodity name, a stock location and a stock volume.

5. The information providing system according to claim 4,
wherein said purchase information storage means is stored with distribution destination information on the case in which each predicted potential purchaser has purchased, and
wherein said analysis means analyzes the matching including a transportation time from said stock location of the stocked commodity to said distribution destination.

6. The information providing system according to claim 4,
wherein said purchase information storage means is stored with distribution destination information on the case in which each predicted potential purchaser has purchased, and
wherein said analysis means analyzes the matching including a transportation cost from the stock location of said stocked commodity to said distribution destination.

7. The information providing system according to claim 1, wherein said seller is in plurality, and wherein said stock information storage means is stored with the commodity identification information for identifying said stocked commodity, by identifying which seller holds the stocked commodity.

8. The information providing system according to claim 1, wherein said purchase information contains purchase information based on the past purchase history.

9. The information providing system according to claim 1, wherein said purchase information contains predicted purchase information.

10. The information providing system according to claim 1, wherein said output means is a terminal connected to an information communication network.

11. The information providing system according to claim 10, wherein said terminal is a terminal of a seller and outputs at least the information on the predicted potential purchaser corresponding to said purchase information in said combinatorial information.

12. The information providing system according to claim 10, wherein said terminal is the terminal of the predicted potential purchaser and outputs at least information on the stocked commodity corresponding to said commodity identification information in said combinatorial information.

13. The information providing system according to claim 12,
wherein said stock information storage means is stored with desired sales price information on said stocked commodity, as set by said seller, and
wherein said terminal of the predicted potential purchaser outputs said desired sales price information together with the information on the stocked commodity corresponding to said commodity identification information

14. The information providing system according to claim 12,
wherein said stock information storage means is stored with desired sales price information on said stocked commodity, as set by said seller, and
wherein said terminal of the predicted potential purchaser outputs said information on the stocked commodity corresponding to said commodity identification information,
further comprising comparison means for comparing, in response to an input of desired purchase price information on the stocked commodity corresponding to said output commodity identification information via the terminal of said predicted potential purchaser, the desired purchase price and said desired sales price, and
wherein the terminal of said predicted potential purchaser outputs result information of negotiability or nonnegotiability in response to the comparison result of said comparison means.

15. The information providing system according to claim 14, wherein said comparison means decides that the transaction is negotiable, if said desired purchase price is equal to or higher than said desired sales price, and decides that it is nonnegotiable, if said desired purchase price is lower than said desired sales price.

16. The information providing system according to claim 15,
wherein said terminal includes a terminal of a seller and outputs at least information on the predicted potential purchaser corresponding to said purchase information in said combinatorial information, and
wherein the terminal of the seller outputs the result information of the negotiability if said comparison means decides that the transaction is negotiable.

17. The information providing system according to claim 13,
wherein said stock information storage means is stored with, in addition to the desired sales price information on said stocked commodity set by said seller, information on a timing for changing the price and the desired sales price after such change, and
wherein said desired sales price is replaced by the changed desired sales price in response to the arrival at said timing for changing the price.

18. An information providing method capable of providing information to sell a stocked commodity held by a seller to at least any one of a plurality of predicted potential purchasers who will possibly purchase the stocked commodity, comprising:
storing commodity identification information for identifying said stocked commodity and deadline management information for managing a deadline of said stocked commodity;
storing purchase information on each of said predicted potential purchaser;
extracting said commodity identification information on a stocked commodity for which the current time has reached or passed over a predetermined deadline of said deadline management information;
analyzing a matching of said extracted commodity identification information with said stored purchase information; and
outputting combinatorial information combining the predicted potential purchaser corresponding to said purchase information and the stocked commodity corresponding to said commodity identification information that were analyzed and estimated to match.

19. The information providing method according to claim 18, wherein said stocked commodity is provided with a stock deadline, and wherein the predetermined deadline of said deadline management information is a designated deadline prior to said stock deadline.
